(19)

Europäisches
Patentamt
European
Patent Office
Office européen
des brevets

(11)     **EP 2 092 620 B1**

(12)                          **EUROPEAN PATENT SPECIFICATION**

(45) Date of publication and mention
of the grant of the patent:
**15.03.2017  Bulletin 2017/11**

(51) Int Cl.:
***H01C 7/112*** *(2006.01)*

(21) Application number: **07835340.6**

(86) International application number:
**PCT/SE2007/050755**

(22) Date of filing: **19.10.2007**

(87) International publication number:
**WO 2008/054308 (08.05.2008 Gazette 2008/19)**

(54) **ELECTRICAL FIELD GRADING MATERIAL**

MATERIAL MIT GRADUIERUNG DES ELEKTRISCHEN FELDES

MATÉRIAU DE GRADATION DE CHAMP ÉLECTRIQUE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **31.10.2006  SE 0602331**

(43) Date of publication of application:
**26.08.2009  Bulletin 2009/35**

(73) Proprietor: **ABB Research Ltd.
8050 Zürich (CH)**

(72) Inventors:
• **JONSSON, Erik
7020 Trondheim (NO)**
• **HILLBORG, Henrik
722 10 Västerås (SE)**

• **ÖSTERLUND, Ragnar
771 43 Ludvika (SE)**

(74) Representative: **Helin, William et al
ABB AB
Intellectual Property
Forskargränd 7
721 78 Västerås (SE)**

(56) References cited:
**EP-A1- 1 585 146       WO-A1-94/25397
WO-A1-02/065486     FR-A1- 2 547 451
US-A- 4 297 250       US-A- 4 726 991
US-A- 5 076 979       US-A- 6 124 549
US-A1- 2003 010 960**

**Description**

TECHNICAL AREA

This invention relates to methods for producing an electrical field grading material, and in particular to a method for producing a composition of matter for effecting electrical stress control, for example, in application of the jointing or termination of electrical power cables.

TECHNICAL BACKGROUND

Electrical field grading materials are electrically stress-controlling compositions and they are key parts in high voltage/medium voltage (HV/MV) cable accessories. The electrical field grading material reduces the electrical stresses in electrically critical positions on the cable accessories.

The resistance of a material as a function of the applied voltage may be classed as "linear" or as "non-linear". A material that has "linear" resistance obeys Ohm's law:

$$I = kV$$

where

I=current
V=voltage, and
k is a constant.

A material that has "non-linear" resistance obeys a generalized form of this equation:

$$I = kV^{\gamma}$$

where $\gamma$ is a constant greater than 1, and the actual value of $\gamma$ depends on the material. This "non-linear" resistance leads to that the resistance of the material decreases as the material is exposed to increasing voltage.

A material used in a varistor is characterized by exhibiting strongly nonlinear resistance. At low voltages the material has a constant $\gamma$ that can range from 5 to 20 depending on if it is exposed to alternating voltage and direct voltage. At breakdown voltage the nonlinearity of the resistance increases dramatically (the constant $\gamma$ that can range from 20 to 70 depending on if it is exposed to alternating voltage and direct voltage). The breakdown voltage depends on the material.

If the material in an application is exposed to excessive voltage stress on a location, the reduced resistance on this location will allow a current to flow and thereby reduce the voltage stress, thereby preventing a possible insulation breakdown on the location.

In the application of jointing or terminating electrical power cables the stress control material has to be flexible. This can be obtained by using a polymeric matrix. Commonly used materials are rubbers, for example EPDM, silicone rubber (which also includes silicone gels, exhibiting a very low degree of crosslinking); thermoplastics, for example polyethylene or polypropylene; adhesives, for example ethylene vinyl acetate; thermosets, for example epoxy or polyester; or combinations of such materials, including copolymers.

The total composition may also comprise other well-known additives for improved processing and/or obtaining desired properties for specific applications. In the latter respect, for example, materials for jointing or termination of electrical power cables may need to withstand outdoor environmental conditions. Suitable additives may thus include processing agents, crosslinking agents, accelerators, inhibitors, stabilizers, antioxidants and plastizisers.

PRIOR ART

Currently used formulations of electrical field grading material uses silicon carbide (SiC) mixed in a polymeric matrix consisting of either EPDM (in High Voltage Direct Current, HVDC, joints/terminations) or silicone rubber (in Medium Voltage Alternating Current, MVAC, applications). Due to market driven changes, the commercial supply of SiC exhibiting desired electrical properties is gradually decreasing and a new type of field grading materials is urgently needed.

Practically the use of sintered micro-varistors as filler in the polymeric matrix has problems since the sintered micro-varistors are difficult to make in sizes smaller than 30 micrometer. When the filler powder in polymeric matrix has a particle size larger than approximately 30 micrometer the filler is "non-reinforcing", meaning that adding the filler to a polymeric might make the polymeric matrix weaker. EP1585146 A1 **discloses a composition in accordance with the Pre-characterizing portion of claim 1.** U.S. Pat. No. 6,124,549 entitled "Electrical stress control" discloses a composition for use as an electrical stress controlling layer for use with cable joints and terminations. The composition comprises a polymeric matrix filled with doped zinc oxide varistor powder. The polymeric matrix could be rubbers, thermoplastic, epoxy resins or adhesives. The zinc oxide powder is doped with up to 15% of various metal oxides. The zinc oxide powder is calcinated at a temp 800 C - 1400 C, broken up and the particles in the resulting powder have mostly a smooth spherical shape with only 5% of the particles exhibiting irregular shapes.

A paper published in the Proceedings of the 8th CIMTEC Ceramic Congress and Forum on Materials Symposium, Florence, Jun. 29 to Jul. 4, 1994, by Strumpler, Kluge-Weiss and Greuter of ABB, entitled Smart Varistor Composites, describes a material comprising doped ZnO varistor powder as filler in a polymeric matrix.

Proposed applications of the material are exemplified as the suppression of voltage transients or field grading in bushings and cable terminations. The filler is prepared by sintering the powder under conditions ranging from 935 C to 1320 C and 4 hours to 20 hours respectively. The shape of the filler particles is said to be almost spherical. It is indicated that agglomerates can have diameters from about 3 micrometers to about 300 micrometers, and that by sieving before or after sintering, a special size fraction can be chosen. The sample prepared is sieved to a particle size of <200 micrometers. The resultant material has a non-linear current/voltage characteristic.

FR-A-2547451 (Electricite De France) discloses a non-linear resistance material for use in distributing voltage in a cable termination. The material comprises a bond or binding agent, which may be a polymeric material, and a ceramic powder based on doped zinc oxide. In this publication, the mass percentage of the powder (the zinc oxide), and its particle size are shown to be the two essential characteristics of the material, with the zinc oxide forming at least 50% of the total mass, and at least 50% of the grains of the powder having a diameter greater than 100 micrometers. The material is shown to be non-linear, with the field strength varying smoothly with current density. The ceramic powder is obtained by crushing a pellet of the material that has been sintered at high temperature (800-1500 C.). That is to say, the initial particles of zinc oxide are compressed at high temperature into a coherent solid body, or pellet, of the kind used as a varistor in high voltage lightning arresters, which is then crushed by means of a planetary agate marble crusher to form the powder. Such crushing results in particles of irregular and usually jagged shape. The non-linearity of the resulting powder is shown to improve as its particle size increases, at a constant percentage (85%) of powder in the total composition. A particle size between 140 micrometers and 200 micrometers is preferred to a size of 100 micrometers to 140 micrometers Samples having a particle size of less than 100 micrometers are shown to be significantly less non-linear.

US 6,469,611 entitled "Non-linear resistance with varistor behavior and method for the production thereof" disclose a nonlinear resistor that has varistor behavior. The nonlinear resistor consists of sintered varistor granules with predominantly spherical particles of doped metal oxide embedded in a polymer matrix.

In the prior art the electrical properties of the electrical field grading material or stress controlling material is only controlled by the size distribution of doped metal oxide particles and the amount of particles in the polymeric matrix.

The waste material from the production of annealed ZnO varistor discs, for example, the powder residue from the polishing of the varistor discs, have currently no commercial uses and the waste have to be processed with a cost for the production plant.

Due to market driven changes, the availability of the current source of SiC powder used in electrical field grading material is reduced.

SUMMARY OF THE INVENTION

The present invention is defined by the features of independent claim 1.

An object of a preferred embodiment of the present invention is to provide a method for producing an electrical field grading material, or as it is also known electrical stress-controlling composition, using a new source of powdered filler with nonlinear electrical characteristics. The electrical field grading material consists of particulate filler in a polymeric matrix. The new source is particulate filler that previously was seen as a production waste from the manufacturing process of doped zinc oxide (ZnO) varistor disks. This waste or residual product can be the powder residue from the polishing of the annealed ZnO varistor disks. The powder can also be obtained by grounding whole ZnO varistor disks.

According to an embodiment of the invention, the addition of carbon black powder to the particulate filler which is mixed in the polymer matrix, the electrical properties of the resulting stress-controlling composition can be controlled. By mixing different amounts of; an isolator (the polymer), a semiconductor (doped zinc oxide) and a conductor (carbon black) the electrical properties of the resulting stress-controlling composition can be fine tuned.

According to an embodiment of the invention, most of the particles in said doped zinc oxide varistor powder have non-spherical and irregular shapes.

According to an embodiment of the invention, most of the particles in said doped zinc oxide varistor powder have fracture surfaces and sharp edges.

According to the invention, the doped zinc oxide varistor powder is a residual product from the production of doped zinc oxide varistor discs.

According to an embodiment of the invention, the residual product from the production of doped zinc oxide varistor discs is mixed in the polymeric matrix without any particle size separation.

According to an embodiment of the invention, residual product from the production of doped zinc oxide varistor discs is size separated and only a part of the size fraction are mixed in the polymeric matrix.

According to an embodiment of the invention, more than 90% of the filler particles have a maximum dimension of between 0,01 and 100 micrometers.

According to an embodiment of the invention, more than 70% of the filler particles have a maximum dimension of between 0,1 and 20 micrometers.

According to an embodiment of the invention, more than 70% by weight of the filler particles have a maximum dimension of between 1 and 10 micrometers.

According to an embodiment of the invention, the particulate filler is a mixture of electrically conducting filler and doped zinc oxide varistor powder.

According to an embodiment of the invention, the electrically conducting filler comprises carbon.

According to an embodiment of the invention, the carbon is mixed into the particulate filler in the form of elementary carbon particles with a maximum dimension less than 30 micrometers.

According to an embodiment of the invention, the carbon is mixed into the particulate filler in the form of carbon fibers with a maximum fiber diameter of 10 micrometers.

According to an embodiment of the invention, the particulate filler comprises up to 30% electrically conducting filler.

According to an embodiment of the invention, the polymeric matrix is EPDM rubber or silicone rubber.

According to an embodiment of the invention, the polymeric matrix is thermoplastics or thermoplastic elastomers.

According to an embodiment of the invention, the polymeric matrix is a thermoset.

According to an embodiment of the invention, the amount of particulate filler in said polymer matrix is less than 40%.

According to an embodiment of the invention, the amount of particulate filler in said polymer matrix is between 5% and 30%.

According to the invention, as defined by the features of claim 1, a method for producing an electrical stress-controlling composition comprising mixing a particulate filler comprising doped zinc oxide varistor powder in a polymeric matrix, where the doped zinc oxide varistor powder is a residual product from the production of doped zinc oxide varistor discs.

According to an embodiment of the invention, the residual product is waste material from surface treatment of varistor discs where varistor material is removed by abrasive processing.

According to an embodiment of the invention, the abrasive processing includes any of the group of processes polishing, grinding, lapping, milling, turning, cutting.

According to an embodiment of the invention, the residual product comprises ground up material from crushing or milling of faulty varistor discs.

According to an embodiment of the invention, the residual product is mixed with the polymeric matrix without any particle size separation.

According to an embodiment of the invention, the residual product from the production of doped zinc oxide varistor discs is size separated and only a part of the size fraction are mixed with the polymeric matrix.

According to an embodiment of the invention, the electrical properties of said stress-controlling composition are controlled by adding electrically conducting filler to said doped zinc oxide varistor powder mixed with said polymeric matrix.

According to an embodiment of the invention, the electrically conducting filler comprises carbon black.

According to an embodiment of the invention, the carbon black filler is in the form of a powder.

According to an embodiment of the invention, the carbon black filler is in the form of fibers.

BRIEF DESCRIPTION OF THE DRAWINGS

The invention will be elucidated by reference to an embodiment partially illustrated in the drawings.

Figure 1 is schematic picture of some doped zinc oxide varistor powder particles as a residual product from the production of zinc oxide varistor discs.

Figure 2 shows the stress-controlling composition as it appears in the prior art.

Figure 3 shows the stress-controlling composition produced according to an embodiment of the invention.

Figure 4 shows the stress-controlling composition produced according to another embodiment of the invention.

Fig. 5 is a graph of the relation between the resistivity and the electric field (stress) for a stress-controlling composition.

Fig. 6 is a graph showing how the relation between the resistivity and the electric field (stress) for a stress-controlling composition can change with different amounts of filler in the polymer matrix or addition of electrically conducting filler.

DETAILED DESCRIPTION OF THE EMBODIMENTS

Detailed descriptions of the preferred embodiment are provided herein. It is to be understood, however, that the present invention may be embodied in various forms. Therefore, specific details disclosed herein are not to be interpreted as limiting, but rather as a basis for the claims and as a representative basis for teaching one skilled in the art to employ the present invention in virtually any appropriately detailed system, structure or manner.

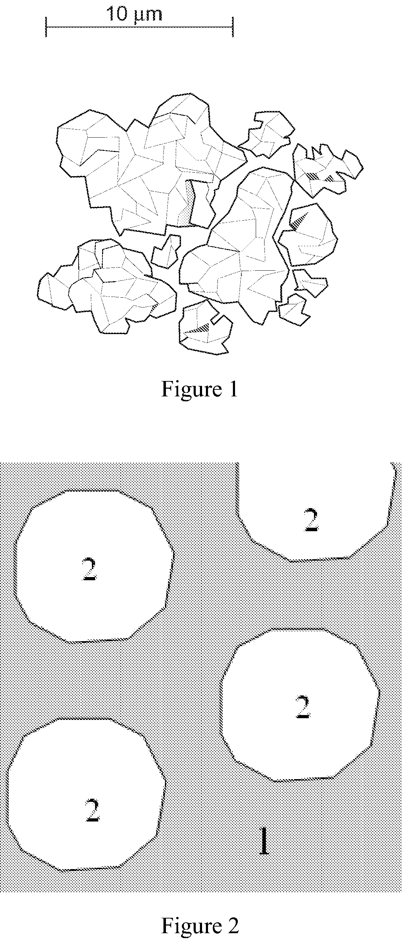

Figure 1 is a schematic picture of some doped zinc oxide varistor powder particles obtained as a residual product from the production of zinc oxide varistor discs. In the picture one can clearly see that the particles are non-spherical and have irregular shapes as well as the fracture surfaces and sharp edges of the particles. The size distribution of the doped zinc oxide particles in this picture is between 1 and 10 micrometers.

Figure 2 shows schematically the stress-controlling composition as it appears in the prior art. The sintered, spherical doped zinc oxide particles 2 are distributed in a polymeric matrix 1.

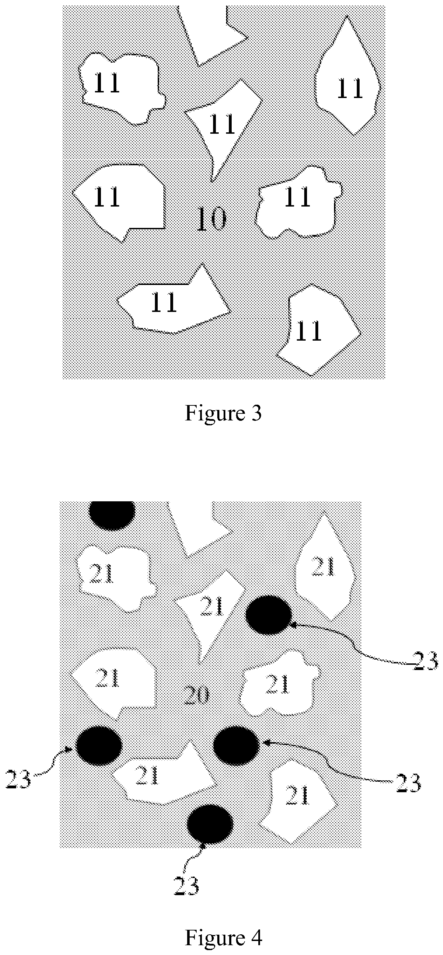

Figure 3 shows schematically the stress-controlling composition produced according to an embodiment of the invention. The non-spherical particles 11 of doped zinc oxide are distributed in a polymeric matrix 10.

Figure 4 shows schematically the stress-controlling composition produced according to another embodiment of the invention. The non-spherical particles 21 of doped zinc oxide are distributed in a polymeric matrix 20. Also distributed in the polymeric matrix 20 are particles of an electrically conducting filler 23 which could be for example carbon black in a powdered form. This creates a composition with an isolator (polymeric matrix 20), semiconductor (particles 21 of doped zinc oxide) and conductor (for example, carbon black powder 23). By changing the proportions of three different materials in the composition makes it possible to design the electrical properties of the resulting stress-controlling composition.

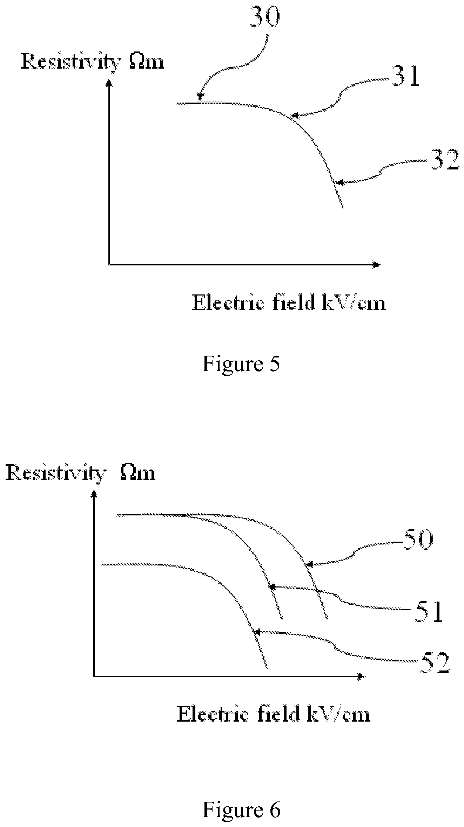

Fig. 5 is a graph of the relation between the resistivity and the electric field (stress) for a stress-controlling composition. The x-axis is logarithmic and shows the electric field (stress) in kV/cm. The y-axis is logarithmic and shows the resistivity in Ohmm. At "low" voltages (<100V/cm) the curve almost horizontal 30 and the material behaves linearly i.e. it obeys Ohms law. Depending on the material the curve begins to move downwards 31 (also known as switching point or breakdown voltage) between 300 V/cm to 2kV/cm. At "high" voltages 32 (depending on material, > 500 V/cm to 4kV/cm) the resistivity of the material reduces almost log-linearly. For example, for one material, increasing the stress from 1 kV/cm to 4 kV/cm reduces the resistivity of the material four orders of magnitude (from 10E14 Ohmm to 10E10 Ohmm).

Fig. 6 is a graph showing how the relation between the resistivity and the electric field (stress) for a stress-controlling composition can change with different amounts of filler in the polymer matrix or addition of electrically conducting filler. By increasing or reducing the amount of doped zinc oxide particles in the polymeric matrix the point where the curve begins to move down changes 50, 51. By adding electrically conducting filler, the resistivity of the stress-controlling composition can be lowered 52. Experiment show that for one material, adding 15 % carbon black in the filler can reduce the resistivity of the stress-controlling composition with up to eight orders of magnitude. Changing the amounts of doped zinc oxide and the amount of electrically conducting filler allows for optimization of the electrical properties of the material. The proposed field grading material can by this optimization process be tuned to values that are similar to the currently used SiC-based materials, which it is replacing.

In the production of varistor disks, doped ZnO powder is pressed and sintered to a solid body. The surfaces of these sintered bodies have to be polished and to get the correct measurements the sintered bodies have to be grinded. The waste material from this polishing and grinding have no commercial use today and pose a waste problem that need to be handled with associated costs.

To use the waste from the surface treatment of the sintered bodies, the polishing or grinding should preferably be done with tools that have fixed diamonds. Using a polishing paste or sanding/lapping with, for example, silicon carbide particles would introduce non ZnO particles in the waste material. The foreign particles could negatively influence the nonlinearity of the final stress-controlling composition. The waste from the surface treatment can be seen as a rest product from the production of varistor disks.

Failed varistor disks could be milled/grinded to create additional rest product with the same material properties as the waste from surface treatment of the sintered bodies.

The powdered rest product from the surface treatment of the sintered bodies could be used without particle size separation, for example by sieving or the rest product could be sieved and only a specific size fraction could be used in producing the electrical field grading material.

The sintered varistor body of doped ZnO used to manufacture a varistor may have any shape in practice and in this description it is referred to as a varistor disc, but in some applications it is also known as cylindrical valve elements.

An electrical field grading material consisting of a polymeric matrix with ZnO particulate filler is a material with nonlinear resistivity. The nonlinear resistivity arises from that the boundary of each grain forms a diode junction. The mass of randomly oriented grains in the polymer matrix is electrically equivalent to a network of back-to-back diode pairs. When a moderate voltage is applied over the material, only a tiny current flow since the diode junctions and the isolating polymer matrix maintain the high resistivity. When a high voltage is applied, the diode junctions break down and due to the avalanche effect of braking diode junctions, a larger current flow. In the highly nonlinear conduction region a triggered tunneling mechanism is the dominating, involving a hole creation. When the voltage exceeds some critical value, it is possible for some electrons, which have overcome the potential barrier to absorb excess energy and by means of impact ionization holes are created. The hole current reduces the height of the barrier. This sudden reduction of the barrier height explains the dramatic increase in the current.

## Claims

1. A method for producing an electrical stress-controlling composition comprising mixing a particulate filler comprising doped zinc oxide varistor powder in a polymeric matrix (10; 20), wherein most of the particles (11; 21) in said doped zinc oxide varistor powder have non-spherical and irregular shapes, **characterized by** obtaining said doped zinc oxide varistor powder as a residual product from the production of doped zinc oxide varistor discs.

2. A method for producing an electrical stress-controlling composition according to claim 1, wherein said polymeric matrix (10; 20) is EPDM rubber or silicone rubber or thermoplastics or thermoplastic elastomers or thermoset.

3. A method for producing an electrical stress-controlling composition according to any of the claims 1-2, wherein said residual product is waste material from surface treatment of varistor discs where varistor material is removed by abrasive processing such as polishing, grinding, lapping, milling, turning, cutting.

4. A method for producing an electrical stress-controlling composition according to claim 2, wherein said residual product comprises ground up material from crushing or milling of faulty varistor discs.

5. A method for producing an electrical stress-controlling composition according to any of the claims 1-4, wherein said residual product from the production of doped zinc oxide varistor discs is size separated and only a part of the size fraction are mixed with the polymeric matrix (10; 20).

6. A method for producing an electrical stress-controlling composition according to any of the claims 1-5, wherein the electrical properties of said stress-controlling composition are controlled by adding electrically conducting filler (23) to said doped zinc oxide varistor powder mixed with said polymeric matrix (10; 20).

7. A method for producing an electrical stress-controlling composition according to claim 6, wherein said electrically conducting filler (23) comprises carbon black.


**Patentansprüche**

1. Verfahren zur Herstellung einer elektrischen belastungsregelnde Zusammensetzung, umfassend das Mischen eines teilchenförmigen Füllstoffs, der ein dotiertes Zinkoxid-Varistorpulver in einer polymeren Matrix (10; 20) umfasst, wobei die meisten Teilchen (11; 21) in dem dotierten Zinkoxid-Varistorpulver nicht kugelförmige und ungleichförmige Formen aufweisen, **dadurch gekennzeichnet, dass** das dotierte Zinkoxid-Varistorpulver als Restprodukt aus der Herstellung von dotierten Zinkoxid-Varistorscheiben erhalten wird.

2. Verfahren zur Herstellung einer elektrischen belastungsregelnden Zusammensetzung nach Anspruch 1, wobei die Polymermatrix (10; 20) EPDM-Kautschuk oder Silikonkautschuk oder Thermoplast oder thermoplastische Elastomere oder Duroplast ist.

3. Verfahren zur Herstellung einer elektrischen belastungsregelnden Zusammensetzung nach einem der Ansprüche 1 bis 2, wobei das Restprodukt Abfallmaterial aus der Oberflächenbehandlung von Varistorscheiben ist, wobei das Varistormaterial durch Abriebbehandlung wie Polieren, Schleifen, Läppen, Fräsen, Drehen, Schneiden entfernt wird.

4. Verfahren zur Herstellung einer elektrischen belastungsregelnden Zusammensetzung nach Anspruch 2, wobei das Restprodukt zermahlenes Material vom Zerkleinern oder Mahlen von fehlerhaften Varistorscheiben umfasst.

5. Verfahren zur Herstellung einer elektrischen belastungsregelnden Zusammensetzung nach einem der Ansprüche 1-4, wobei das Restprodukt aus der Herstellung von dotierten Zinkoxid-Varistorscheiben in Größen getrennt wird und nur ein Teil der Größenfraktion mit der Polymermatrix (10; 20) gemischt wird.

6. Verfahren zur Herstellung einer elektrischen belastungsregelnden Zusammensetzung nach einem der Ansprüche 1-5, wobei die elektrischen Eigenschaften der belastungsregelnden Zusammensetzung durch Zugeben von elektrisch leitendem Füllstoff (23) zu dem dotierten Zinkoxid-Varistorpulver gesteuert werden, das mit der Polymermatrix (10; 20) gemischt wird.

7. Verfahren zur Herstellung einer elektrischen belastungsregelnden Zusammensetzung nach Anspruch 6, wobei der elektrisch leitende Füllstoff (23) Ruß umfasst.


**Revendications**

1. Procédé de production d'une composition de régulation de la contrainte électrique comprenant le mélange d'une charge particulaire comprenant de la poudre de varistor d'oxyde de zinc dopé dans une matrice polymère (10 ; 20), dans lequel la plupart des particules (11 ; 21) dans ladite poudre de varistor d'oxyde de zinc dopé ont des formes non sphériques et irrégulières, **caractérisé par** l'obtention de ladite poudre de varistor d'oxyde de zinc dopé sous forme de produit résiduel à partir de la production de disques de varistor d'oxyde de zinc dopé.

2. Procédé de production d'une composition de régulation de la contrainte électrique selon la revendication 1, dans lequel ladite matrice polymère (10 ; 20) est un caoutchouc EPDM ou un caoutchouc de silicone ou des thermoplastiques ou des élastomères thermoplastiques ou une résine thermodurcissable.

3. Procédé de production d'une composition de régulation de la contrainte électrique selon l'une quelconque des revendications 1 et 2, dans lequel ledit produit résiduel est de la matière de déchets provenant du traitement de surface de disques de varistor, où une matière de varistor est éliminée par un traitement abrasif tel qu'un polissage, un meulage, un rodage, un fraisage, un tournage, un découpage.

4. Procédé de production d'une composition de régulation de la contrainte électrique selon la revendication 2, dans lequel ledit produit résiduel comprend une matière meulée issue du broyage ou du fraisage de disques de varistor défectueux.

5. Procédé de production d'une composition de régulation de la contrainte électrique selon l'une quelconque des revendications 1 à 4, dans lequel ledit produit résiduel provenant de la production de disques de varistor d'oxyde de zinc dopé est séparé par taille et uniquement une partie de la fraction granulométrique est mélangée avec la matrice polymère (10 ; 20).

6. Procédé de production d'une composition de régulation de la contrainte électrique selon l'une quelconque des revendications 1 à 5, dans lequel les propriétés électriques de ladite composition de régulation de la contrainte sont régulées en ajoutant une charge électriquement conductrice (23) à ladite poudre de varistor d'oxyde de zinc dopé mélangée avec ladite matrice polymère (10 ; 20).

7. Procédé de production d'une composition de régulation de la contrainte électrique selon la revendication 6, dans lequel ladite charge électriquement conductrice (23) comprend du noir de carbone.

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1585146 A1
- US 6124549 A
- FR 2547451 A
- US 6469611 B

### Non-patent literature cited in the description

- **STRUMPLER ; KLUGE-WEISS ; GREUTER OF ABB.** Proceedings of the 8th CIMTEC Ceramic Congress and Forum on Materials Symposium, Florence. *Smart Varistor Composites,* 29 June 1994